# EUROPEAN PATENT APPLICATION

(11) **EP 1 522 398 A1**
(43) Date of publication of application: **13.04.2005**
(21) Application number: 04022919.7
(22) Date of filing: 27.09.2004
(51) Int. Cl.: B29C 65/02, H02K 41/02, B31B 19/64

(54) **Device for moving the welding assembly, particularly for machines for manufacturing plastic bags**

(30) Priority: 08.10.2003 IT MI20031934
(71) Applicant: SALDOFLEX S.R.L., 21058 Solbiate Olona (Varese) (IT)
(72) Inventor: Filippini, Giancarlo, 21058 Solbiate Olona (Varese) (IT)
(74) Representative: Forattini, Amelia

(57) **Abstract**

A device for moving the welding assembly, particularly for machines for manufacturing plastic bags, which includes a machine body that supports at least one welding assembly that can move with respect to a contrast base, characterized in that the movable welding assembly is actuated by a linear motor (101).

## Description

The present invention relates to a device for moving the welding assembly, particularly for machines for manufacturing plastic bags.

Machines for manufacturing plastic bags normally have an upper welding bar, which undergoes an intermittent vertical motion and is heated by means of resistors or of other heating members. The upper welding bar is adapted to make contact with a contrast bar or lower contrast base in order to weld the material.

The material being processed, usually in the form of a flat or tubular film made of plastics or constituted by two or more superimposed sheets, is conveyed between the bars, retained for a certain time between them, and forced to fuse by welding, by means of the action of the heat transmitted by them.

The intermittent vertical motion can be imparted to the welding bar by means of various systems, for example cams, eccentric elements or other elements suitable to provide the alternating motion.

The most commonly used system comprises an eccentric element which, in combination with an adapted mechanism, forces the welding bar to perform the intermittent motion and therefore the welding operation in specific times.

The bar is usually mounted on elastic members, springs or others, which, by compressing at impact time, produce a sort of mutual stasis, known as "timing", of said bars even though the eccentric element continues its rotation such stasis allows the plastics thus retained to heat and fuse by welding.

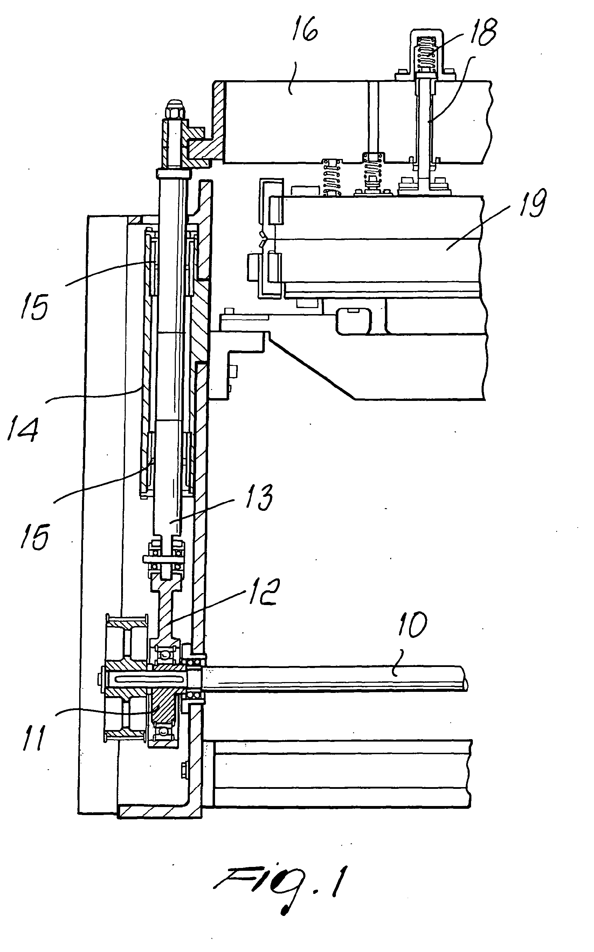

Figure 1 illustrates a welding device of a conventional type, in which the reference numeral 10 designates a rotating axis on which an eccentric element 11 is fitted; the eccentric element is connected to a linkage 12 to which a rod 13 is rigidly coupled, and the rod slides within a sleeve 14, in which sleeves with ball bearings 15 are accommodated.

An upper welding assembly 16 is rigidly associated with the end of the rod 13 and can move alternately, separating from, or resting on, a lower welding assembly 19, which acts as a contrast base.

A rod and spring system 18 determines the so-called "timing", i.e., a stasis during which the plastic film being processed; arranged between the two welding assemblies 16 and 19, is welded by the heat.

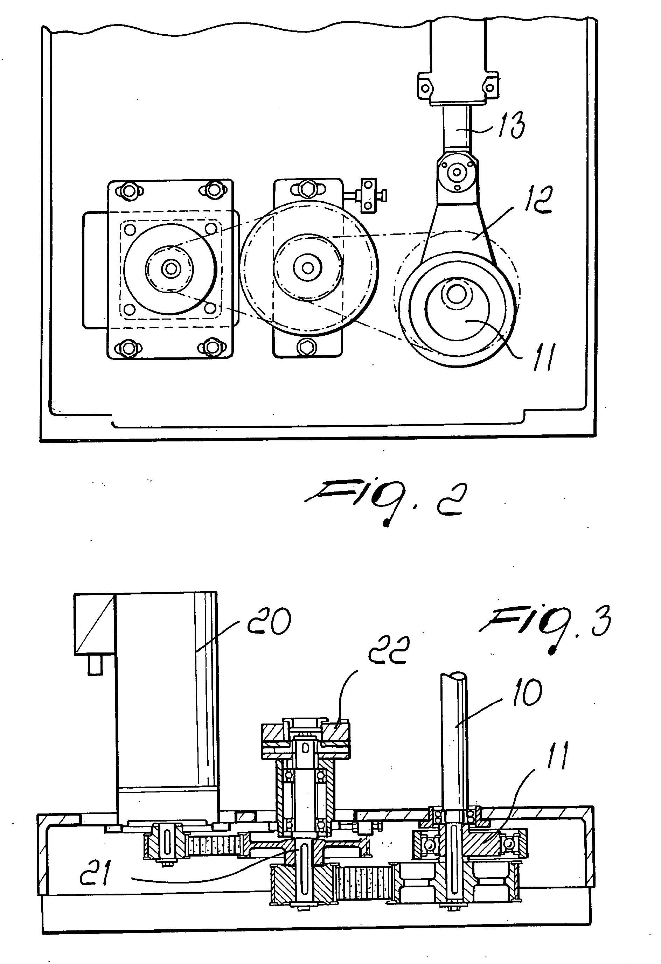

Figures 2 and 3 are schematic views of an example of a conventional motor drive of the welding unit, which has an actuation motor 20 that actuates a transmission gear system 21 on which a safety brake 22 is fitted.

Conventional systems of the type described above have the drawback of causing considerable noise due to the impact between the bars.

Another drawback is the considerable wear of the elements that constitute the device and of the insulating coatings, made of Teflon or the like, of the welding bars.

The aim of the present invention is to provide a device for moving the welding assembly, particularly for machines for manufacturing plastic bags, that overcomes the drawbacks of the cited prior art.

An object of the invention is to provide a device that is capable of speeding up the production process.

A further object of the invention is to provide a device that offers a considerable reduction in vibration and noise.

A further object is to provide a device that ensures extreme flexibility in choosing the gaps between the welding bars, depending on the type of material being worked; this is not possible with conventional systems but is very important for cycle optimization.

A further object is to provide a device that allows to optimize the time for which the two bars remain in mutual contact, i.e., the so-called welding timing.

A further object is to provide a device that is capable of providing a pressure to be applied between said bars that is adapted to provide optimum welding.

This aim and these and other objects that will become better apparent hereinafter are achieved by a device for moving the welding assembly, particularly for machines for manufacturing plastic bags, comprising a machine body that supports at least one welding assembly that can move with respect to a contrast base, characterized in that said movable welding assembly is actuated by a linear motor.

Further characteristics and advantages of the invention will become better apparent from the description of preferred but not exclusive embodiments of the invention, illustrated by way of non-limiting example in the accompanying drawings, wherein:
Figure 1 is a partial front view of a conventional type of welding device;
Figure 2 is a side view of a motor assembly of a conventional type of welding device;
Figure 3 is a sectional plan view of the motor assembly of Figure 2;

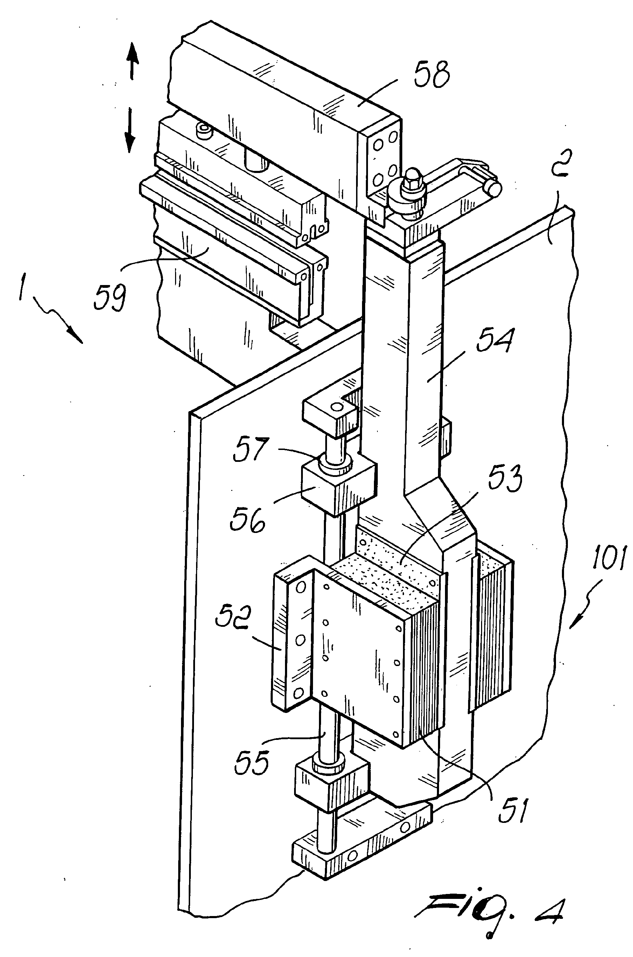

Figure 4 is a perspective view of the motion device according to the invention.

With reference to the cited figures, a device according to the invention, generally designated by the reference numeral 1, comprises a machine body 2, which supports an upper welding assembly 58, which is suitable to perform a vertical rising and descending motion with respect to a contrast base 59, which can be fixed or likewise movable.

According to the invention, the upper welding assembly 58 is actuated by a linear motor, generally designated by the reference numeral 101, which comprises a "stator" 51, which can be single or double, as in the illustrated example, is fixed to the machine body 2 by means of a support 52, and is connected to the corresponding actuation system.

A magnetic rail 53 is connected to a supporting rod 54. The alignment of the supporting rod 54 is ensured by a system of rods 55 and of supports 56, in which sleeves with ball bearings 57 are accommodated.

The guiding system can also be provided by other means, such as for example ball- or roller-bearing linear guides.

The upper welding assembly 58 is connected to the supporting rod 54 and accordingly performs the vertical ascending and descending motion against the contrast base 59, which can be stationary or movable.

The sudden ascent of the bar instantaneously frees the region through which the material being worked must pass, allowing the member that draws the material, i.e., the calender, to perform its function in less extreme conditions.

The linear motor manages the subsequent descent in a differentiated manner, making the upper bar stop a few tenths of a millimeter from the lower bar, thus avoiding a sudden impact, and immediately thereafter apply a load with a strong thrust, for a preset time, in order to achieve welding.

The frequency of actuation, i.e., the number of cycles per minute, can be defined at will depending on the type and size of the bag to be produced, which is obviously synchronized with the intermittent advancement of the plastic film being worked.

Also, depending on the article to be produced, it is possible to adjust the dimensions of the gap between the welding bars by acting directly from a console and, as mentioned, also adjust the time for which the bars must remain in contact and the pressure, i.e., amount of thrust, that one wishes to apply in order to obtain a product of optimum quality.

In practice it has been found that the invention achieves the intended aim and objects, a device for moving the welding assembly, particularly for machines for manufacturing plastic bags, having been provided which, by way of the adoption of linear motors, solves the problems of vibration, speed and efficiency of conventional systems.

The device according to the present invention also allows to simplify the task of the operator, because all manual interventions for adjustment and synchronization are eliminated. The program in fact allows to select from a console the parameters that are most suited to the material being worked.

The device according to the invention is susceptible of numerous modifications and variations, all of which are within the scope of the inventive concept; all the details may furthermore be replaced with technically equivalent elements.

The materials used, as well as the dimensions, may of course be any according to requirements and to the state of the art.

## Claims

1. A device for moving the welding assembly, particularly for machines for manufacturing plastic bags, comprising a machine body that supports at least one welding assembly that can move with respect to a contrast base, **characterized in that** said movable welding assembly is actuated by a linear motor.

2. The device according to claim 1, **characterized in that** said linear motor comprises a stator, which can be single or double and is rigidly coupled to said machine body or to said movable welding assembly.

3. The device according to claim 2, **characterized in that** said stator is rigidly coupled to said machine body by means of a support and is connected to the corresponding actuation system.

4. The device according to one or more of the preceding claims, **characterized in that** it comprises a magnetic rail, which is connected to a supporting rod, the alignment of which is ensured by a system of rods and supports in which ball-bearing sleeves are accommodated; vice versa, when said stator is rigidly coupled to said movable welding assembly, said magnetic rail is rigidly coupled to said machine body.

5. The device according to one or more of the preceding claims, **characterized in that** said guiding system is constituted by linear guides with ball bearings or roller bearings or by any other suitable system.

6. The device according to one or more of the preceding claims, **characterized in that** the upper welding assembly is connected to the supporting rod and accordingly performs the ascending or descending vertical motion against the contrast base, which can be fixed or likewise movable.

7. The device according to one or more of the preceding claims, **characterized in that** the linear motor manages the subsequent descent in a differentiated manner, so that the upper bar stops a few tenths of a millimeter away from the lower bar, thus avoiding a sudden impact, and immediately thereafter applies a load with an intense thrust, for a preset time, in order to achieve welding.

8. The device according to one or more of the preceding claims, **characterized in that** the frequency of the interventions, i.e., the number of cycles per minute, can be defined at will depending on the type and size of the bag to be produced, and is synchronized with the intermittent advancement of the plastic film being worked.

9. The device according to one or more of the preceding claims, **characterized in that** depending on the article to be produced, it is possible to set the opening gap between the welding bars by acting directly from a console.
